# EUROPÄISCHE PATENTSCHRIFT

(11) **EP 0 599 895 B1**
(45) Veröffentlichungstag und Bekanntmachung des Hinweises auf die Patenterteilung: **20.11.1996**
(21) Anmeldenummer: 92916940.7
(22) Anmeldetag: 12.08.1992
(51) Int. Cl.: C04B 28/26, C04B 38/02, F27D 1/00

(54) **OFEN MIT WÄRMEISOLIERUNG UND VERFAHREN ZU SEINER HERSTELLUNG**
FURNACE WITH THERMAL INSULATION, AND METHOD OF MANUFACTURE
FOUR A ISOLATION THERMIQUE ET SON PROCEDE DE FABRICATION

(30) Priorität: 12.08.1991 DE 4126628
(43) Veröffentlichungstag der Anmeldung: 08.06.1994
(73) Patentinhaber: HT TROPLAST AG, D-53840 Troisdorf (DE); W. STRIKFELDT & KOCH GmbH, D-51674 Wiehl (DE)
(72) Erfinder: SCHMIDT, Günther, D-5220 Waldbröl (DE); RANDEL, Peter, D-4018 Langenfeld (DE); ENGELS, Hans, Werner, D-5210 Troisdorf (DE); GEICK, Bernd, D-5208 Eitorf (DE)
(86) Internationale Anmeldenummer: EP9201826
(87) Internationale Veröffentlichungsnummer: WO9304010

(56) Entgegenhaltungen:
- EP-A- 0 364 668
- EP-A- 0 399 786
- EP-A- 0 417 583
- WO-A-89/05285
- DE-A- 3 512 588
- DE-A- 4 020 297
- DE-U- 9 101 866
- FR-A- 2 296 485

## Beschreibung

### Technisches Gebiet

Die Erfindung betrifft einen Ofen mit einer Innenwandung, einer Außenwandung und einer zwischen der Innenwandung und der Außenwandung angeordneten Wärmeisolierung und ein Verfahren zur Herstellung eines Ofens unter Verwendung eines anorganischen Schaums, der aus einer anorganischen aushärtbaren Masse aufgeschäumt und ausgehärtet wird.

Die Erfindung betrifft insbesondere Öfen für Metallschmelzen wie Warmhalte-, Dosier- und Schmelzöfen, insbesondere im NE-(Nichteisen-)Bereich.

Metall schmelzende Öfen sowie sonstige Öfen sowohl im Flüssigmetallbereich als auch im Heiz- und Brennerbereich erfordern eine hochwirksame und temperaturbeständige Isolierung. Dies ist sowohl aus prozeßtechnischen Gründen als auch aus Gründen der Energieeinsparung notwendig.

### Stand der Technik

Bei einem üblichen Verfahren zur Herstellung von Öfen für Metallschmelzen wie Warmhalte-, Dosier- und Schmelzöfen wird zunächst eine Außenwanne aus Stahl hergestellt, die innen mit mehreren, sich jeweils überlappenden Schichten von Isolierplatten oder -matten aus z. B. Keramikfasern ausgekleidet wird.

Nach dem Einbringen der Isolierung wird unter Bildung eines Zwischenraumes eine Innenverschalung eingesetzt. In diesen Zwischenraum zwischen der Faserplattenisolierung und der Innenverschalung wird anschließend ein Feuerfestbeton gegossen, der nach Aushärtung die Innenwandung des Ofens darstellt.

Dieses Aufbringen von z. B. Isolierfaserplatten ist außerordentlich arbeitsintensiv, da die Faserplatten wegen der relativ komplizierten Geometrie der Öfen jeweils genau zugeschnitten, eingepaßt und von Hand befestigt werden müssen. Auf diese Isolierung fallen in der Praxis nicht selten mehr als 50 % der gesamten Herstellkosten eines solchen Ofens.

Auch verbleiben hierbei stets nicht gewünschte Spalten und Lükken, wodurch einerseits die Festigkeit der Isolierschicht nachteilig beeinflußt wird, andererseits Wärmebrücken entstehen, die neben den Energieverlusten auch zu Schäden an der Ofenkonstruktion und bei einem Austreten von flüssigem Metall zu Unfällen führen können.

Ein weiterer Nachteil der bekannten Öfen besteht darin, daß bei einem Riß oder einer sonstigen Beschädigung der Innenwandung flüssiges Metall in die Isolierschicht gelangen kann, wobei diese oft vollständig von der Metallschmelze penetriert und damit unbrauchbar wird. Eine Reparatur ist nur durch vollständigen Ersatz der gesamten Isolierung und der Innenwandung möglich.

Ebenfalls bekannt ist das Gießen aus Isolierbeton oder anderen Massen. Diese Lösungen sind von der Verarbeitung her sehr aufwendig und vom Material her sehr teuer. Bei der Verarbeitung können außerdem Gesundheitsschäden auftreten.

Aus der EP-A1-0 364 668 ist ein schäumbarer anorganische Baustoff auf der Basis von Flugasche und Wasserglas sowie dessen Verwendung als Isolierstoff, Brandschutzbeschichtung und zur Erhöhung des Feuerwiderstandes auf Stahlkonstruktionen bekannt. Das Material kann auch in Höhlräume oder Hohlkörper geschäumt werden. Ähnliche Formmassen sind auch aus der WO-A-89/05783, der DE-C3-35 12 515 und der EP-A-0 199 941 bekannt.

Aus der DE-A1-25 59 151 ist schließlich ein feuerfestes Futter für metallurgische Behälter mit einer Verschleißschicht, einem Metallmantel und einem wärmedämmenden Überzug aus Steinen mit einer offenen Porösität zwischen 55 und 84 % bekannt.

### Aufgabe

Der Erfindung liegt die Aufgabe zugrunde, einen Ofen mit einer zwischen einer Innen- und einer Außenwand angeordneten Wärmeisolierung zu schaffen, bei dem die Wärmeisolierung einfach und kostengünstig herzustellen ist, eine hohe Festigkeit aufweist und die Bildung von Wärmebrücken vermeidet.

Ein weiteres Anliegen der Erfindung ist es, einen Ofen für flüssige Metalle zur Verfügung zu stellen mit einer Wärmeisolierung, die resistent und penetrationssicher gegenüber flüssigen Metallschmelzen ist.

### Darstellung der Erfindung

Diese Aufgabe wird erfindungsgemäß durch die Merkmale der Ansprüche 1 und 11 gelöst.

Wesentliches Merkmal der Erfindung ist es, daß die Wärmeisolierung in situ, d. h. unmittelbar an der zu isolierenden Stelle im Ofen, aufgeschäumt und ausgehärtet wird. Nach einem bevorzugten Verfahren zur Herstellung eines Ofens werden zunächst die Außenwandung, z. B. in bekannter Weise aus Stahl, und die Innenwandung getrennt hergestellt. Die Innenwandung kann in dem Fachmann bekannter Weise im Gieß-, Stampf- oder Spritzverfahren aus Feuerfestbeton oder anderen feuerfesten Massen oder durch Mauern aus Feuerfest-Steinen erstellt werden. Grundsätzlich kann die Innenwanne auch auf andere dem Fachmann bekannte Weise hergestellt werden, z. B. aus keramischen Platten, die miteinander verschraubt und gegeneinander abgedichtet werden. Die fertig ausgehärtete und bevorzugt getemperte Innenwandung wird dann so in die Außenwandung gestellt, daß ein Abstand zwischen der Außen- und der Innenwandung verbleibt, der der gewünschten Dicke der Isolierung entspricht. In diesen Zwischenraum wird anschließend eine Mischung aus reaktivem Feststoff, wasserhaltigem alkalischen Härter, Füllstoffen und Treibmittel gegossen, wobei je nach eingestelltem Schäumfaktor (Menge des Treibmittels) nur etwa 10 bis 30 Volumenprozent benötigt werden. Ggf. kann der Ofen dabei leicht (max. ca. 50 bis 80 °C angewärmt werden, um die Aushärtung zu beschleunigen. In der Regel kann aber bei Raumtemperatur gearbeitet werden, da durch die Zersetzung des Schäummittels (bevorzugt H₂O₂) und durch die exotherme Reaktion der Masse genügend Wärme freigesetzt wird, um die geschäumte Masse auf etwa 60 bis 90 °C zu erwärmen und innerhalb von 0,5 bis 5 Stunden auszuhärten.

Durch die Verwendung eines anorganischen Schaums für die Wärmeisolierung, der aus einer anorganischen aushärtbaren Masse in situ aufgeschäumt und ausgehärtet wird, entsteht eine zusammenhängende, durchgängige und dadurch relativ feste Isolierschicht, die die Bildung von Wärmebrücken verhindert. Das Einfüllen der anorganischen aushärtbaren Masse in die Hohlräume bzw. das Auftragen auf die zu isolierenden Flächen erfordert nur geringen Aufwand. Die erfindungsgemäß eingesetzten anorganischen aufschäumbaren und aushärtbaren Massen sind grundsätzlich bekannt, siehe z. B. DE-C2 35 12 515, WO 89/05783, EP-A2 0 199 941, EP-B1 0 148 280, jedoch ist ihre Eignung zur in-situ-Isolierung von Öfen nicht zu erwarten gewesen.

Es hat sich überraschend herausgestellt, daß die erfindungsgemäß eingesetzte schäum- und aushärtbare Masse im ausgehärteten Zustand absolut resistent und dicht gegenüber Metallschmelzen ist. Somit wird selbst bei einer Undichtigkeit der Ofen-Innenwand die Isolationswirkung nicht beeinträchtigt.

Der Schaum hat eine gute Isolierwirkung, ist leicht, preisgünstig und im ausreagierten Zustand nicht gesundheitsschädlich. Ausbruch muß nicht auf Sondermülldeponien gelagert werden. Der Schaum ist gegen viele Stoffe resistent und hat je nach Zusammensetzung eine Temperaturbeständigkeit bis zu 1200 °C.

Bevorzugte Rezepturen für die schäumbare Masse sind in den Ansprüchen 4 bis 6 angegeben. Sie sind als Handelsprodukt unter der Bezeichnung TROLIT ^{R}-Härter bzw. TROLIT ^{R}-Feststoff von der Fa. Hüls Troisdorf AG lieferbar.

Die für die Herstellung eines Ofens, bei dem die Isolierung zwischen einer Innenwandung und einer Außenwandung angeordnet ist, erforderliche Masse, die unter Volumenvergrößerung zu einem unbrennbaren Schaumstoff aufgeschäumt und ausgehärtet wird, wird durch Mischen der Komponenten entweder von Hand oder maschinell vorbereitet. Die Masse enthält auf 100 Gew.-Teile eines reaktiven Feststoffes (steinbildende Komponente) 40 bis 250 Gew.-Teile eines wasserhaltigen Härters, der die Härtungsreaktion des reaktiven Feststoffes im alkalischen Bereich bewirkt, 40 bis 250 Gew.-Teile Füllstoffe sowie ein Treibmittel. Die Masse wird in die zu isolierenden Hohlräume des Ofens bzw. zwischen Innenwandung und Außenwandung eingefüllt, und schäumt durch die einsetzende chemische Reaktion unter einer erheblichen Volumenvergrößerung auf, wodurch die Hohlräume völlig ausgefüllt werden. Ein Verbleiben von Spalten und Lücken ist ausgeschlossen. Die Masse härtet anschließend in exothermer Reaktion aus.

Bei der Herstellung von Öfen werden vorzugsweise auf die Innenwandung in wenigsten einem Teilbereich ihrer Fläche Mineral-bzw. Keramikfaserplatten oder -matten aufgebracht, bevor anschließend der verbleibende Zwischen- oder Hohlraum ausgeschäumt wird. Die Faserplatten bzw. -matten weisen eine höhere Bruchdehnung als der ausgehärtete Schaum auf, wodurch die Temperaturwechselfestigkeit gesteigert und die Rißneigung bei Temperaturwechselbeanspruchung verringert wird. Der ausgehärtete anorganische Schaum ist wenigstens weitgehend geschlossenzellig ausgebildet.

Der anorganische Schaum bildet bevorzugt - mit Ausnahme von Durchbrüchen in den Wandungen - eine in sich vollständig geschlossene Fläche zwischen der Innenwandung und der Außenwandung des Ofens.

Die Öfen mit einer derartigen Wärmeisolierung sind für die unterschiedlichsten Anwendungsbereiche herstellbar, insbesondere für Schmelz-, Warmhalte- und Dosieröfen.

Die in der anorganischen aushärtbaren Masse enthaltenden reaktiven Feststoffe (steinbildende Komponenten) enthalten bevorzugt einen oder mehrere reaktionsfähige Feststoffe aus der Gruppe
I eines feinteiligen Oxidgemisches mit Gehalten von amorphem Siliziumdioxid und Aluminiumoxid, insbesondere als Elektofilterstaub aus der Elektrokorundherstellung,
II einer glasartigen, amorphen Elektrofilterasche,
III eines gemahlenen kalzinierten Bauxit,
IV einer Elektrofilterasche aus Braunkohlekraftwerken,
V eines ungelösten, amorphen Siliziumdioxids (SiO₂), insbesondere aus einer amorphen, dispers-pulverförmigen, entwässerten oder wasserhaltigen Kieselsäure oder aus Hochtemperaturprozessen (Silica Fume),
VI eines Metakaolin.

Der in der anorganischen aushärtbaren Masse zur Bildung des anorganischem Schaums vorhandene wasserhaltige Härter ist vorzugsweise eine Alkalisilikatlösung mit 1,2 bis 2,5 mol SiO₂ je mol K₂O und/oder Na₂O.

Als Füllstoffe in der aufschäumbaren und aushärtbaren anorganischen Masse werden insbesondere Glimmer und feinkörniges Talkum verwendet.

Nachdem der Schaum aus der aushärtbaren anorganischen Masse aufgeschäumt und gehärtet wurde, weist er eine Dichte von 120 bis 350 kg/m³ auf, wobei die gewünschte Dichte über die Menge des Treibmittels in relativ weiten Grenzen eingestellt werden kann.

Die aus dem anorganischen Schaum bestehende Wärmeisolierung ist nicht nur für die Verwendung in Öfen geeignet, sondern auch für deren Zubehör. Die in Frage kommenden Ofenanlagen sind beispielsweise Ofenanlagen für Gießereien zur Metallbehandlung von festen und flüssigen Metallen, insbesondere Al-, Zn-, GG-, GS-Schmelz-, Warmhalte- und Dosieröfen für Metallschmelzen, wobei der anorganische Schaum undurchlässig für und resistent gegen die Metallschmelze ist, oder Ofenanlagen für Recyclingvorgänge, wie Spänetrocknung, Sandregenerierung, Ausbrennöfen (Epoxilite) und für die thermische Nachverbrennung.

Das Zubehör für diese Ofenanlagen, das mit dem anorganischen Schaum ausgekleidet oder beschichtet ist, sind z. B. Hauben, Abdeckungen, Deckel, Kanäle, Türen und Kamine sowie Transportpfannen für Flüssigmetall und Vorheizanlagen.

Der Schaum dient nicht nur als Isolierung gegen Wärmeverlust, sondern gleichzeitig als Schalldämmung.

### Kurze Beschreibung der Zeichnung

Die Erfindung wird nachfolgend anhand eines Ausführungsbeispiels sowie der Zeichnung näher erläutert. Es zeigen dabei
- Fig. 1: einen erfindungsgemäß hergestellten Ofen für Metallschmelzen im Vertikalschnitt,
- Fig. 2: einen erfindungsgemäß hergestellten Ofen für Metallschmelzen im Horizontalschnitt,
- Fig. 3: die Einzelheit X gemäß Fig. 1,
- Fig. 4: Einzelheit X gemäß Fig. 1 nach einer alternativen Ausführung der Erfindung.

### Bester Weg zur Ausführung der Erfindung

Zur Herstellung eines Aluminium-Warmhalte-Schöpfofens 1 mit einem Fassungsvermögen von 750 kg Metallschmelze 6 wird zunächst die Außenwandung 3 aus 5 mm dickem Stahlblech erstellt.

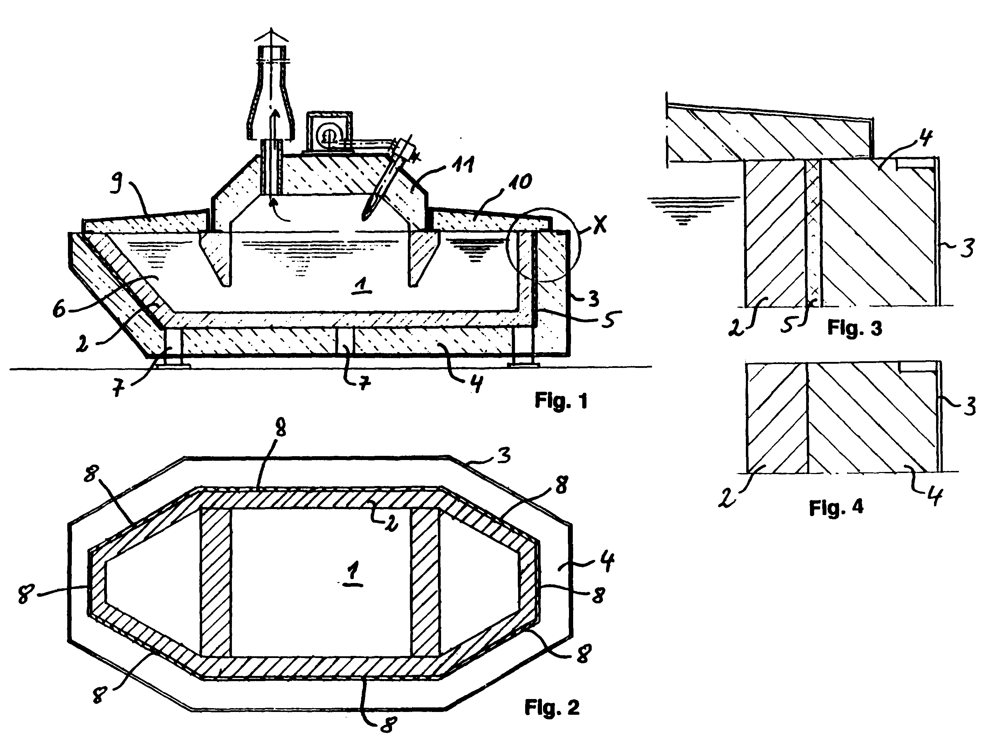

Parallel hierzu wird die Innenwandung 2 aus Feuerfest-Beton mit einer Wandstärke von 100 mm gegossen und 5 bis 7 Tage bei 700°C getempert. Diese eigenstabile Wanne wird anschließend an den Seitenflächen 8 mit 30 mm dicken Isolierplatten 5 aus keramischen Fasern vollflächig vorisoliert (Einzelheit X , Figur 3).

In die Außenwanne aus Stahlblech (Außenwandung 3) werden einige Bodenstützen 7 mit einer Höhe von 220 mm gesetzt, auf die anschließend die Innenwanne gestellt wird, wobei jeweils ein Abstand von 220 mm zwischen der Innenwandung 2 und der Außenwandung 3 verbleibt.

Für die aufschäumbare und aushärtbare Masse wird folgender Ansatz gewählt:
a) Reaktiver Feststoff: TROLIT ^{R}-Reaktionsstoff Type ROS (Filterstaub einer Elektrofilter-Abgasreinigung eines Elektroschmelzofens zur Herstellung von Elektrokorund; enthält ein feinteiliges Oxidgemisch mit Gehalten von amorphem Siliziumdioxid und Aluminiumoxid).
b) Füllstoff: 65,5 Gew.-% feinkörniges Talkum
   33 Gew.-% Magnesiumglimmer (PHLOGOPIT)
   1,5 Gew.-% alkaliresistente Glasfasern.
c) Härter: TROLIT ^{R}-Härter Type AOS (51,4 Gew.-% Wasser, 25,5 Gew.-% SiO₂ gelöst, 23,1 Gew.-% K₂O).
d) Schäummittel: 10 Gew.-%-iges H₂O₂

Der Gesamtansatz besteht aus
22 Gew.-% reaktivem Feststoff
34 Gew.-% Füllstoff
36 Gew.-% Härter
8 Gew.-% Schäummittel.

Zunächst werden Feststoff, Füllstoff und der Härter in einem alkaliresistenten Mischer homogen miteinander vermischt. Erst unmittelbar vor dem Einbringen der etwas dickflüssigen Masse in den Zwischenraum zwischen der Innenwandung 2 und der Außenwandung 3 wird das Treibmittel dosiert beigegeben. Entweder wird kontinuierlich beim Einfüllen der Masse in den Zwischenraum das Schäummittel eingemischt (kombinierte Förder- und Dosierpumpe), oder die Masse wird portionsweise mit Treibmittel vermischt und sofort eingefüllt. Die benötigte Menge der aufschäumbaren Masse beträgt etwa 1/4 bis 1/5 des Volumens des auszufüllenden Zwischenraumes, je nach gewünschter Dichte.

Durch die Zersetzung des H₂O₂ wird die Masse innerhalb weniger Minuten aufgeschäumt und füllt nach ca. 10 Minuten das Volumen vollständig aus. Die exotherme Härtungsreaktion startet nach ca. 20 Minuten, verbunden mit einer merklichen Temperaturerhöhung der Masse, und ist nach ca. 60 Minuten weitgehend abgeschlossen. Der entstandene Schaum weist folgende physikalische Daten auf:
- Dichte:: 300 kg/m³
- Wärmeleitfähigkeit: bei 400°C: 0,2 W/m°K
bei 800°C: 0,35 W/m°K

Der anorganische Schaum ist feinporig, geschlossenzellig sowie absolut dicht und resistent gegen alle Metallschmelzen.

Bei einer Temperatur der Metallschmelze 6 von 750°C beträgt die Temperatur der Außenwandung 3 maximal 60°C.
In Figur 4 ist die Einzelheit X nach einer alternativen Ausführung der Erfindung im Detail dargestellt. Hier wird die Innenwandung aus Feuerfestbeton nicht, wie in Figur 3 dargestellt, zusätzlich mit einem Isoliermaterial 5 aus keramischen Fasern isoliert, die Wärmeisolierung 4 besteht vielmehr ausschließlich aus der aufgeschäumten Masse. Die Dicke der Wärmeisolierung 4 beträgt in diesem Ausführungsbeispiel 350 mm.

In Figur 1 ist ebenfalls dargestellt, daß weitere Teile des Ofens, wie der Deckel 9 für das Einfüllen der flüssigen Schmelze, der hintere Deckel 10 zur Entnahme des flüssigen Metalls, der Heizdeckel 11, die Abgashaube 12 sowie die Schalldämmhaube 13 ebenfalls ganz oder teilweise aus dem erfindungsgemäß eingesetzten Schaum bestehen.

## Patentansprüche

1. Ofen (1) mit einer Innenwandung (2), einer Außenwandung (3) und einer zwischen der Innenwandung (2) und der Außenwandung (3) angeordneten Wärmeisolierung (4), **dadurch gekennzeichnet**, daß die Wärmeisolierung (4) wenigstens teilweise aus einem anorganischen Schaum besteht, der aus einer anorganischen aushärtbaren Masse in dem Zwischenraum zwischen der Innenwandung (2) und der Außenwandung (3) in situ aufgeschäumt und ausgehärtet wurde, wobei die Masse
- auf 100 Gew.-Teile eines reaktiven Feststoffes (steinbildende Komponente),
- 40 - 250 Gew.-Teile eines wasserhaltigen Härters, der die Härtungsreaktion des reaktiven Feststoffes (steinbildende Komponente) im alkalischen Bereich bewirkt,
- 40 - 250 Gew.-Teile Füllstoffe
sowie ein Treibmittel enthält.

2. Ofen nach Anspruch 1, **dadurch gekennzeichnet**, daß die Innenwandung (2) wenigstens in Teilbereichen ihrer Fläche mit einem zweiten anorganischen wärmedämmenden Isoliermaterial (5) abgedeckt ist, dessen Bruchdehnung höher ist als die des ausgehärteten anorganischen Schaums.

3. Ofen nach einem der Ansprüche 1 oder 2, **dadurch gekennzeichnet**, daß der ausgehärtete anorganische Schaum wenigstens weitgehend geschlossenzellig ausgebildet ist.

4. Ofen nach einem der Ansprüche 1 bis 3, **dadurch gekennzeichnet**, daß der reaktive Feststoff (steinbildende Komponente) einen oder mehrere reaktionsfähige Feststoffe aus der Gruppe
I feinteiliges Oxidgemisch mit Gehalten von amorphem Siliziumdioxid und Aluminiumoxid,
II glasartige, amorphe Elektrofilterasche,
III gemahlener kalzinierter Bauxit,
IV Elektrofilterasche aus Braunkohlekraftwerken,
V ungelöstes, amorphes SiO₂, insbesondere aus einer amorphen, dispers-pulverförmigen, entwässerten oder wasserhaltigen Kieselsäure oder aus Hochtemperaturprozessen (Silica Fume),
VI Metakaolin,
enthält.

5. Ofen nach einem der Ansprüche 1 bis 4, **dadurch gekennzeichnet**, daß als wasserhaltiger Härter eine Alkalisilikatlösung mit 1,2 bis 2,5 Mol SiO₂ je Mol K₂O und/oder Na₂O eingesetzt wird.

6. Ofen nach einem der Ansprüche 1 bis 5, **dadurch gekennzeichnet**, daß als Füllstoffe in der aufschäumbaren und aushärtbaren anorganischen Masse überwiegend Glimmer und feinkörniges Talkum verwendet werden.

7. Ofen nach einem der Ansprüche 1 bis 6, **gekennzeichnet durch** eine Dichte des anorganischen Schaums von 120 - 350 kg/m³.

8. Ofen nach einem der Ansprüche 1 bis 7, **dadurch gekennzeichnet**, daß der anorganische Schaum eine mit Ausnahme von Durchbrüchen in den Wandungen in sich vollständig geschlossene Fläche zwischen der Innenwandung (2) und der Außenwandung (3) des Ofens (1) bildet.

9. Ofen nach einem der Ansprüche 1 bis 8, **dadurch gekennzeichnet**, daß der anorganische Schaum undurchlässig für Metallschmelzen (6) ist.

10. Ofen nach einem der Ansprüche 1 bis 9, ***dadurch gekennzeichnet****,* daß als Treibmittel Wasserstoffperoxid verwendet wird.

11. Verfahren zur Herstellung eines Ofens (1) mit einer Innenwandung (2), einer Außenwandung (3) und einer zwischen der Innenwandung (2) und der Außenwandung (3) angeordneten Wärmeisolierung (4), **dadurch gekennzeichnet**, daß der Zwischenraum zwischen der Innenwandung (2) und der Außenwandung (3) des Ofens (1) mit einer aufschäumbaren und aushärtbaren Masse zu einem Teil seines Volumens gefüllt wird, wobei die Masse
- auf 100 Gew.-Teile eines reaktiven Feststoffes (steinbildende Komponente),
- 40 - 250 Gew.-Teile eines wasserhaltigen Härters, der die Härtungsreaktion des reaktiven Feststoffes (steinbildende Komponente) im alkalischen Bereich bewirkt,
- 40 - 250 Gew.-Teile Füllstoffe
sowie ein Treibmittel enthält, und daß anschließend die Masse in situ aufgeschäumt und ausgehärtet wird, so daß der entstehende Schaum den Zwischenraum vollständig ausfüllt.

12. Verfahren nach Anspruch 11, ***dadurch gekennzeichnet****,* daß vor dem Einfüllen der aufschäumbaren und aushärtbaren Masse auf die Innenwandung (2) in wenigstens einem Teilbereich ihrer Fläche Mineral- bzw. Keramik-Faserplatten oder -matten aufgebracht werden.

## Claims

1. A furnace (1) having an inner wall (2), an outer wall (3) and a heat insulation (4) arranged between the inner wall (2) and the outer wall (3), characterised in that the heat insulation (4) consists at least partially of an inorganic foam, which is foamed up and hardened in situ within the interspace between the inner wall (2) and the outer wall (3) from an inorganic hardenable mass, the mass containing,
- per 100 parts by weight of a reactive solid (stone-forming component),
- 40-250 parts by weight of a water-containing hardener which effects the hardening reaction of the reactive solid (stone-forming component) in the alkaline region,
- 40-250 parts by weight of fillers
and a blowing agent.

2. Furnace according to Claim 1, characterised in that the inner wall (2) is covered, at least on part areas of its surface, by a second inorganic heat-insulating insulation material (5), whose elongation at break is higher than that of the hardened inorganic foam.

3. Furnace according to one of Claims 1 or 2, characterised in that the hardened inorganic foam has an at least largely closed-cell structure.

4. Furnace according to one of Claims 1 to 3, characterised in that the reactive solid (stone-forming component) contains one or more reactive solids from the group comprising
I finely disperse oxide mixture containing amorphous silica and alumina,
II glassy, amorphous electrostatic precipitator ash,
III ground calcined bauxite,
IV electrostatic precipitator ash from lignite-fired power stations,
V undissolved, amorphous SiO₂, especially from an amorphous, disperse-pulverulent, dehydrated or water-containing silica or from high-temperature processes (silica fume) and
VI metakaolin.

5. Furnace according to one of Claims 1 to 4, characterised in that the water-containing hardener used is an alkali metal silicate solution with 1.2 to 2.5 mol of SiO₂ per mol of K₂O and/or Na₂O.

6. Furnace according to one of Claims 1 to 5, characterised in that the fillers used in the foamable and hardenable inorganic mass are predominantly mica and fine-grained talc.

7. Furnace according to one of Claims 1 to 6, characterised by a density of the inorganic foam of 120-350 kg/m³.

8. Furnace according to one of Claims 1 to 7, characterised in that the inorganic foam forms a surface, which is completely closed in itself, with the exception of passages in the walls, between the inner wall (2) and the outer wall (3) of the furnace (1).

9. Furnace according to one of Claims 1 to 8, characterised in that the inorganic foam is impervious to molten metals (6).

10. Furnace according to one of Claims 1 to 9, characterised in that the blowing agent used is hydrogen peroxide.

11. Process for the manufacture of a furnace (1) having an inner wall (2), an outer wall (3) and a heat insulation (4) arranged between the inner wall (2) and the outer wall (3), characterised in that the interspace between the inner wall (2) and the outer wall (3) of the furnace (1) is filled, for at least part of its volume, with a foamable and hardenable mass, the mass containing,
- per 100 parts by weight of a reactive solid (stone-forming component),
- 40-250 parts by weight of a water-containing hardener which effects the hardening reaction of the reactive solid (stone-forming component) in the alkaline region,
- 40-250 parts by weight of fillers
and a blowing agent, and that subsequently the mass is foamed up and hardened in situ, so that the resulting foam completely fills the interspace.

12. Process according to Claim 11, characterised in that, before filling with the foamable and hardenable mass, panels or mats of mineral fibres or ceramic fibres are applied to the inner wall (2) on at least a part area of its surface.

## Revendications

1. Four (1) comportant une paroi intérieure (2), une paroi extérieure (3) et un isolant thermique (4) disposé entre les parois intérieure (2) et extérieure (3), caractérisé par le fait que l'isolant thermique (4) est constitué au moins partiellement d'une mousse minérale obtenue par expansion et durcissement in situ, dans l'espace entre la paroi intérieure (2) et la paroi extérieure (3), d'une masse minérale durcissable, ladite masse contenant:
- jusqu'à 100 parties en poids d'une matière solide réactive (composant formant de la pierre)
- 40 - 250 parties en poids d'un durcisseur aqueux qui favorise la réaction de durcissement de la matière solide réactive (composant formant de la pierre) en milieu alcalin,
- 40 - 250 parties en poids de charges
ainsi qu'un agent gonflant.

2. Four selon la revendication 1, caractérisé par le fait que la paroi intérieure (2) est couverte, au moins en des zones partielles de sa surface, d'un deuxième matériau (5) minéral thermiquement isolant dont l'allongement à la rupture est supérieur à l'allongement à la rupture de la mousse minérale durcie.

3. Four selon la revendication 1 ou 2, caractérisé par le fait que la mousse minérale durcie est au moins essentiellement à pores fermés.

4. Four selon l'une des revendications 1 à 3, caractérisé par le fait que la matière solide réactive (composant formant de la pierre) contient une ou plusieurs matières solides réactives appartenant au groupe
I mélange d'oxydes en fine particules avec de l'oxyde de silicium amorphe et de l'oxyde d'aluminium,
II cendres d'électrofiltres vitreuses, amorphes,
III bauxite calcinée broyée,
IV cendres d'électrofiltres de centrales utilisant de la tourbe,
V SiO₂ amorphe non dissous, notamment provenant d'un acide silicique amorphe, sous forme de poudre dispersée, déshydraté ou aqueux (silice fumée)
VI métakaolin.

5. Four selon l'une des revendications 1 à 4, caractérisé par le fait que l'on utilise comme durcissant aqueux une solution de silicate alcalin avec 1,2 à 2,5 mole SiO₂ par mole de K₂O et/ou Na₂O.

6. Four selon l'une des revendications 1 à 5, caractérisé par le fait que l'on utilise comme charge dans la masse minérale expansible et durcissable, essentiellement du mica et du talc en fines particules.

7. Four selon l'une des revendications 1 à 6, caractérisé par une densité de la mousse minérale comprise entre 120 et 350 kg/m³.

8. Four selon l'une des revendications 1 à 7, caractérisé par le fait que la mousse minérale, à l'exception de passages dans les parois, forme une surface entièrement fermée entre la paroi intérieure (2) et la paroi extérieure (3) du four (1).

9. Four selon l'une des revendications 1 à 8, caractérisé par le fait que la mousse minérale est imperméable aux bains de métal en fusion (6).

10. Four selon l'une des revendications 1 à 9, caractérisé par le fait que l'on utilise comme agent gonflant du peroxyde d'hydrogène.

11. Procédé de fabrication d'un four (1) comportant une paroi intérieure (2), une paroi extérieure (3) et un isolant thermique (4) disposé entre les parois intérieure (2) et extérieure (3), caractérisé par le fait que l'on remplit partiellement l'espace entre la paroi intérieure (2) et la paroi extérieure (3) du four (1) d'une masse expansible et durcissable, la masse contenant
- jusqu'à 100 parties en poids d'une matière solide réactive (composant formant de la pierre)
- 40 - 250 parties en poids d'un durcisseur aqueux qui favorise la réaction de durcissement de la matière solide réactive (composant formant de la pierre) en milieu alcalin,
- 40 - 250 parties en poids de charges
ainsi qu'un agent gonflant et par le fait qu'ensuite on fait gonfler et durcir in situ la masse de telle sorte que la mousse formée remplisse complètement l'espace intermédiaire.

12. Procédé selon la revendication 11, caractérisé par le fait qu'avant injection de la masse expansible et durcissable on applique sur la paroi intérieure (2), sur au moins une zone partielle de la surface de celle-ci, des plaques ou des mats de fibres minérales ou céramiques.
